⑲ ))) **Europäisches Patentamt**

**European Patent Office** · (11) Publication number: **0 035 479**

**Office européen des brevets** **B1**

(12) **EUROPEAN PATENT SPECIFICATION**

(45) Date of publication of patent specification: **05.06.85** (51) Int. Cl.⁴: **H 02 K 15/10, H 02 K 3/52**

(21) Application number: **81850024.1**

(22) Date of filing: **16.02.81**

(54) Electric rotary machine.

<table>
<tr><td>(30) Priority: <b>05.03.80 SE 8001719</b></td><td>(73) Proprietor: <b>AKTIEBOLAGET ELECTROLUX<br>Luxbacken 1<br>S-105 45 Stockholm (SE)</b></td></tr>
<tr><td>(43) Date of publication of application:<br><b>09.09.81 Bulletin 81/36</b></td><td></td></tr>
<tr><td></td><td>(72) Inventor: <b>Larsson, Nils Folke<br>Blockstupet 1<br>S-163 58 Spänga (SE)</b></td></tr>
<tr><td>(45) Publication of the grant of the patent:<br><b>05.06.85 Bulletin 85/23</b></td><td></td></tr>
<tr><td>(84) Designated Contracting States:<br><b>DE FR GB NL</b></td><td>(74) Representative: <b>Hagelbäck, Evert Isidor et al<br>c/o AB Electrolux Patentavdelningen<br>S-105 45 Stockholm (SE)</b></td></tr>
<tr><td>(56) References cited:<br><b>DD-B- 60 588<br>DE-B-2 758 637<br>DE-C- 886 628<br>FR-A-1 428 520</b></td><td></td></tr>
</table>

Courier Press, Leamington Spa, England.

## Description

The present invention relates to an electric rotary machine according to the preamble of Claim 1.

In manufacturing small electric motors, particularly commutator motors, it is desired that the assembly work be performed in a completely automatic way. Up to now, this has not been possible due to the fact that the termination of the stator wire ends had to be carried out manually. The termination process included the steps of removing insulation, applying an insulating hose, soldering and fixing of the wires, which steps are time-consuming.

The invention has for its object to reduce the manual working steps being part of the process of assembling an electric rotary machine of the kind specified. In this connection it is desirable that after completion of the stator windings, having been machine-wound directly on the stator core, the wire ends of the windings in an automatic process be conveyed and connected to pins being part of terminal blocks. The object is achieved by an electric rotary machine having the characterizing features stated in Claim 1. Preferred embodiments appear from the subclaims.

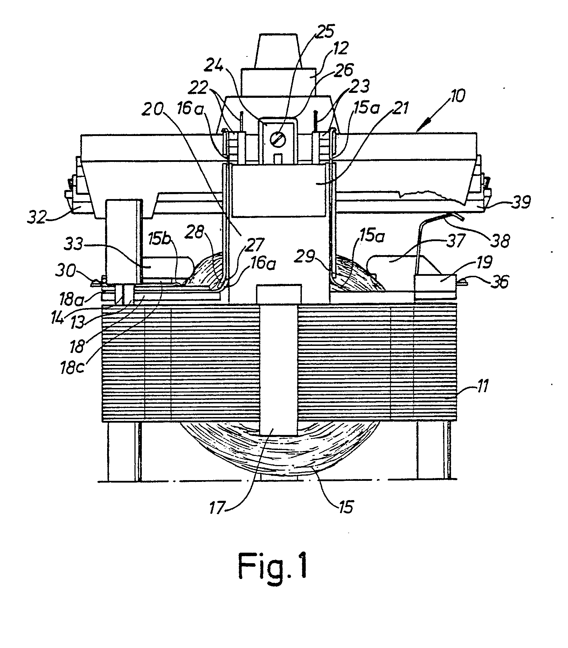

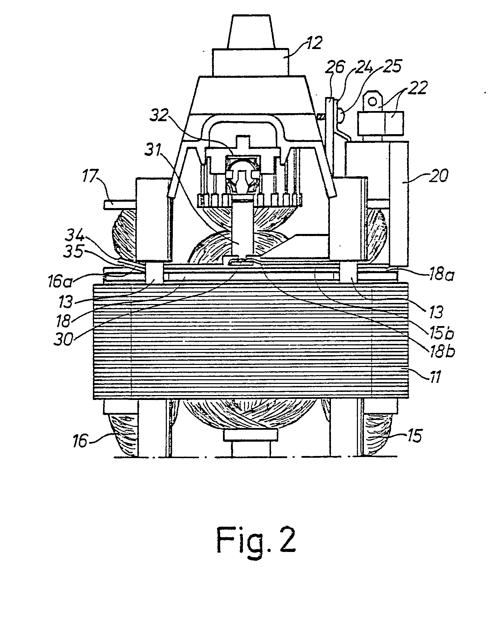

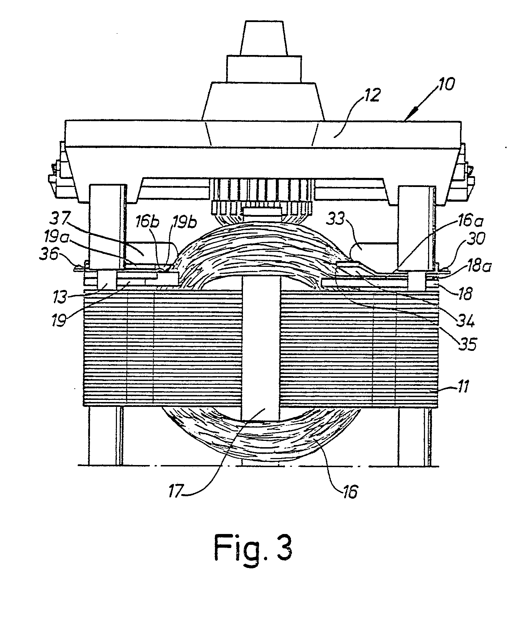

An embodiment of the invention will now be described in detail with reference to the accompanying drawings in which Figs. 1—3 show a commutator motor in three different side views.

The motor, generally referred to by the reference numeral 10, comprises a stator core 11 which in the usual way consists of stator laminations which are stacked. The stator core, a first end cap 12, four pins 13 and a second end cap, not shown, together form the frame of the motor 10. The stator lamination pack and the end caps are pushed on the pins 13 and are retained on the pins, for example by longitudinal ridges 14 on the said pins.

The stator core 11 is provided with two windings 15, 16 being supported by a winding holder 17. Each winding in the usual manner being electrically insulated from the stator core by a winding insulation, has a leading end 15a, 16a, respectively, and a final end 15b and 16b, respectively. On the stator core are also mounted two terminal blocks 18, 19 consisting of insulating plastics material. For instance the blocks can be provided with pins which are pressed into holes in the stator lamination pack. The terminal block 18 has a groove 18a taking up and guiding the wire end 16a to a holder 20 for an interference suppressor 21. The suppressor has terminal pins 22, 23 to be connected to the mains and a pin 24 which is connected by a screw 25 to a projection 26 being part of the end cap 12 and forming an earth connection. The holder 20 is provided with a groove 27 for guiding the wire end 16a to the terminal 22. One of the walls defining the groove 27 has a curved part 28 forming a gentle change-over between the groove 18a and the groove 27. The holder 20 also has a groove 29 for the guidance of the wire end 15a to the terminal pin 23.

The terminal block 18 also has a terminal pin 30 to which the wire end 15b is connected. The pin is part of a contact spring 31 which extends upwards and contacts a brush holder 32. For the guidance of the wire end 15b the block 18 is provided with a groove 18b, the entrance part 18c of which having the form of a slit and being situated under a resilient tongue 33 of the terminal block. The tongue has gently rounded edges to facilitate insertion of the wire end 15b in the groove 18b. To further facilitate insertion of the said wire end the tongue 33 is positioned so as to form together with the winding 15 a V-shaped entrance opening to the entrance part 18c of the groove 18b. The free end of the tongue is resiliently biassed against the winding 15 thereby preventing a wire end inserted in the entrance part 18c of the groove from loosening and taking an uncontrolled position. In order to facilitate the insertion of the wire end 16a in the groove 18a the terminal block 18 is provided with a lug 34, which together with the underlying part of the terminal block forms a V-shaped groove 35 directed towards the groove 18a.

The terminal block 19 has a design similar to that of the terminal block 18. Thus, a groove 19a is provided for the guidance of the wire end 16b to a terminal pin 36. The groove has an entrance part 19b having the shape of a slit and being situated under a resilient tongue 37. The grooves 18a, 18b, 19a, 19b, 27 and 29 have a width somewhat exceeding the greatest diameter of the wires used for the windings. For the wires of the windings to be well protected in the grooves the latter are cut to a depth exceeding the diameter of the wire by a factor of two. Any groove corresponding to the groove 18a in the terminal block 18 is not required in the block 19. As appears from Fig. 1 the terminal pin 36 forms part of a contact spring 38 which is resiliently biassed against a brush holder 39.

In the manufacture of a motor of the kind described above the windings 15, 16 are machine-wound directly on the stator core 11. After the completion of the windings the winding machine transfers the wire ends 15b and 16b to and inserts them in the V-shaped openings formed by the tongues 33 and 37 and the respective winding 15, 16. During the continued movement performed by the machine the said wire ends are guided downwards between the respective tongue, which yields, and the co-operating winding, after which the wire ends are guided around the respective tongue and inserted in the entrance parts 18c, 19b of the grooves 18b and 19a. The wire end 16a is locked by the remaining winding turns and need not be further secured. This applies also to the wire end 15a. When the winding procedure is finished, the stator and the adherent terminal blocks are transferred to another automatic machine transferring the wire ends 15b, 16b via the respective groove 18b, 19a to the terminal pins 30, 36 to which the wire ends are secured by welding. Then, the holder 20 and the interference suppressor 21 are mounted, and the automatic machine transfers the wire end 16a via the groove 18 into the groove 27 and the wire end 15a directly into the groove 29. Then the wire ends 16a and 15a are drawn by the machine up to the pins 22, 23, to which the wire ends are connected by welding. Subsequently the motor is finished in a way known per se.

In the manufacture of small electric rotary machines the invention provides a possibility of recognizing the different wire ends of the windings which later are to be connected to different terminal pins. Moreover, in assembling such machines it will be possible to make use of automatic mounting machines, which may also be used for transferring wire ends to terminals and for connecting said wire ends to the terminals.

## Claims

1. Electric rotary machine (10) having a stator (11) provided with windings (15, 16) and supporting a terminal block (18) made from insulating material and having at least one terminal pin (30), characterized in that the terminal block (18) is provided with a resilient tongue (33) forming together with one (15) of the windings a V-shaped entrance throat for receiving a winding wire end (15b), the resilient tongue (33) together with the remaining part of the terminal block (18) forming a groove (18c) into which the said wire end (15b) may be inserted via the entrance throat and there secured, the terminal block (18) being provided with a further groove (18b) accepting the wire end (15b) and guiding it to the area of the terminal pin (30).

2. Machine according to Claim 1, characterized in that the free end of the resilient tongue (33) bears against the winding (15).

3. Machine according to Claim 1 or Claim 2, characterized in that the free end of the resilient tongue (33) has rounded edges.

4. Machine according to Claim 1, 2 or 3, wherein the electric machine is a commutator motor (10) having two stator windings (15, 16) and two brushes, which are arranged in brush holders (32; 39) of electrically conductive material and insulatingly mounted in said machine, characterized in that two terminal blocks (18; 19) are provided, each connecting a final wire end (15b; 16b) of one winding (15; 16) to one of the brushes, wherein the respective terminal block (18, 19) has a contact pin (30; 36) constituting one end of a contact spring (31; 38), the other end of which being biassed against the brush holder (32; 39).

5. Machine according to Claim 4, characterized in that one (18) of the two terminal blocks (18, 19) extends between the two windings (15, 16) and has a groove (18a) taking up and guiding a leading end (16a) of one winding (16) to a further terminal block (20) supporting an interference suppressor (21) and being situated at the other winding (15).

6. Machine according to Claim 5, characterized in that the further terminal block (20) is provided with two grooves (27, 29), one (27) of which taking up and guiding the leading end (16a) of the opposite winding (16) and the other groove (29) taking up and guiding the leading end (15a) of the adjacent winding (15).

7. Machine according to Claim 6, characterized in that the groove (18a) provided in the terminal block (18) and enclosing the leading end (16a) of the wire of the opposite winding (16) has a direction which intersects the direction of the corresponding groove (27) in the further terminal block (20), the two grooves (18a, 27) having co-operating ends which are interconnected by a curved surface (28) of an outer side wall of the further terminal block (20).

8. Machine according to any preceding claim, characterized in that the grooves in the terminal blocks (18, 19) have a depth exceeding by a factor of two the diameter of the wire of the windings.

## Patentansprüche

1. Rotierende elektrische Maschine (10) mit einem Stator (11), der mit Wicklungen (15, 16) versehen ist, an dem ein aus Isoliermaterial gebildeter Anschlußblock (18) angeordnet ist und der mindestens einen Anschlußstift (30) aufweist, dadurch gekennzeichnet,

daß der Anschlußblock (18) mit einer federnden Zunge (33) versehen ist, die zusammen mit einer (15) der Wicklungen einen V-förmigen Eintrittsschacht zum Aufnehmen eines Endes (15b) eines Wicklungsdrahtes bildet,

daß die federnde Zunge (33) zusammen mit dem verbleibenden Teil des Anschlußblocks (18) eine Rille (18c) bildet, in die das Ende (15b) des Drahtes über den Eintrittsschacht eingeführt und dort gesichert werden kann und

daß der Anschlußblock (18) mit einer weiteren Rille (18b) versehen ist, die das Ende (15b) des Drahtes aufnimmt und es in den Bereich des Anschlußstiftes (30) führt.

2. Maschine nach Anspruch 1, dadurch gekennzeichnet, daß das freie Ende der federnden Zunge (33) gegen die Wicklung (15) drückt.

3. Maschine nach Anspruch 1 oder Anspruch 2, dadurch gekennzeichnet, daß das freie Ende der federnden Zunge (33) gerundete Ränder aufweist.

4. Maschine nach Anspruch 1, 2 oder 3, wobei die elektrische Maschine als Kommutatormotor (10) ausgebildet ist, der zwei Statorwicklungen (15, 16) und zwei Bürsten aufweist, die in Bürstenhalterungen (32; 39) aus elektrisch leitendem Material angeordnet sind und isolierend in der Maschine angeordnet sind, dadurch gekennzeichnet, daß zwei Anschlußblöcke (18; 19) vorgesehen sind, von denen jeder ein Ende (15b; 16b) eines Drahtes jeweils einer Wicklung (15; 16) mit jeweils einer der Bürsten verbindet, wobei der jeweilige Anschlußblock (18, 19) einen Anschlußstift (30; 36) aufweist, der das eine Ende einer Kontaktfeder (31; 38) bildet, deren anderes Ende gegen die Bürstenhalterung (32; 39) vorgespannt ist.

5. Maschine nach Anspruch 4, dadurch gekennzeichnet, daß sich einer (18) der beiden Anschlußblöcke (18, 19) zwischen den beiden Wicklungen (15, 16) erstreckt und eine Rille (18a) hat, die das vordere Ende (16a) einer Wicklung (16) aufnimmt und zu einem weiteren Anschlußblock (20) führt, an dem eine Entstöranordnung (21) befestigt ist und der in der Nähe der anderen Wicklung (15) angeordnet ist.

6. Maschine nach Anspruch 5, dadurch gekennzeichnet, daß der weitere Anschlußblock (20) mit zwei weiteren Rillen (27, 29) versehen ist, von denen die eine (27) das vordere Ende (16a) der gegenüberliegenden Wicklung (16) aufnimmt und führt und die andere Rille (29) das vordere Ende (15a) der benachbarten Wicklung (15) aufnimmt und führt.

7. Maschine nach Anspruch 6, dadurch gekennzeichnet, daß die Rille (18a), die in dem Anschlußblock (18) vorgesehen ist und das vordere Ende (16a) des Drahtes der gegenüberliegenden Wicklung (16) umfaßt eine Richtung aufweist, die die Richtung der entsprechenden Rille (27) in dem weiteren Anschlußblock (20) schneidet und daß die beiden Rillen (18a, 27) zusammenwirkende Enden aufweisen, die miteinander durch eine gekrümmte Oberfläche (28) einer äußeren Seitenwand des weiteren Anschlußblocks (20) verbunden sind.

8. Maschine nach einem der vorangehenden Ansprüche, dadurch gekennzeichnet, daß die Rillen in den Anschlußblöcken (18, 19) eine Tiefe aufweisen, die um einen Faktor von zwei den Durchmesser des Drahtes der Wicklungen überschreitet.

**Revendications**

1. Machine électrique rotative (10) ayant un stator (11) pourvu d'enroulements (15, 16) et supportant un bloc terminal (18) en matière isolante ayant au moins une borne (30) caractérisée en ce que le bloc terminal (18) est pourvu d'une languette élastique (33) formant avec un des enroulements (15) une gorge d'entrée en forme de V destinée à recevoir une extrémité de fil d'enroulement (15b), la languette élastique (33) avec la partie restante du bloc terminal (18) formant un sillon (18c) dans lequel ladite extrémité de fil (15b) peut être insérée par l'intermédiaire de la gorge d'entrée et y être assujettie, le bloc terminal (18) étant pourvu d'un autre sillon (18), acceptant l'extrémité du fil (15b) et la guidant jusqu'à l'endroit où se situe la borne (30).

2. Machine selon la revendication 1, caractérisée en ce que l'extrémité libre de la languette élastique (33) s'appuie contre l'enroulement (15).

3. Machine selon la revendication 1 ou 2, caractérisée en ce que l'extrémité libre de la languette élastique (33) a des bords arrondis.

4. Machine selon les revendications 1, 2 ou 3, dans laquelle la machine électrique est un moteur à collecteur (10) ayant deux enroulements statoriques (15, 16) et deux balais, qui sont disposés dans des porte-balais (32; 39) en matière conductrice de l'électricité et montés de manière isolée dans ladite machine, caractérisée en ce que les deux blocs terminaux (18; 19) sont prévus chacun pour relier un fil d'extrémité distale (15b; 16b) d'un enroulement (15; 16) vers l'un des balais, dans laquelle le bloc terminal correspondant (18, 19) a une borne (30; 36) constituant une extrémité du ressort de contact (31; 38), dont l'autre extrémité est maintenue contre le porte-balais (32; 39).

5. Machine selon la revendication 4, caractérisée en ce que l'un (18) des deux blocs terminaux (18, 19) se prolonge entre les deux enroulements (15, 16) et possède un sillon (18a) prenant et guidant une extrémité proximale (16a) d'un enroulement (16) vers un autre bloc terminal (20) supportant un circuit anti-parasites (21) et qui est situé sur l'autre enroulement (15).

6. Machine selon la revendication 5, caractérisée en ce que l'autre bloc terminal (20) est pourvu de deux sillons (27, 29), dont l'un (27) prend et guide l'extrémité proximale (16a) de l'enroulement opposé (16) et l'autre sillon (29) prenant et guidant l'extrémité proximale (15a) de l'enroulement adjacent (15).

7. Machine selon la revendication 6, caractérisée en ce que le sillon (18a) réalisé dans le bloc terminal (18) et renfermant l'extrémité proximale (16a) du fil de l'enroulement opposé (16) a une direction qui coupe la direction du sillon correspondant (27) de l'autre bloc terminal (20), les deux sillons (18a, 27) ayant des extrémités coopérantes qui sont reliées par une surface courbée (28) d'une paroi latérale extérieure de l'autre bloc terminal (20).

8. Machine selon l'une quelconque des revendications précédentes, caractérisée en ce que les sillons ménagés dans les blocs terminaux (18, 19) ont une profondeur qui est le double du diamètre du fil des enroulements.

Fig.1

Fig. 2

Fig. 3